# EUROPÄISCHE PATENTSCHRIFT

(11) **EP 1 013 368 B1**
(45) Veröffentlichungstag und Bekanntmachung des Hinweises auf die Patenterteilung: **18.08.2004**
(21) Anmeldenummer: 99122984.0
(22) Anmeldetag: 19.11.1999
(51) Int. Cl.: B23C 3/05

(54) **Ventilsitzbearbeitungswerkzeug**
Valve seat working tool
Outil d'usinage de siège de soupape

(30) Priorität: 22.12.1998 DE 19859051
(43) Veröffentlichungstag der Anmeldung: 28.06.2000
(73) Patentinhaber: MAPAL Fabrik für Präzisionswerkzeuge Dr. Kress KG, D-73431 Aalen (DE)
(72) Erfinder: Kress, Dieter, Dr. Ing., 73431 Aalen (DE); Jäger, Herbert, 74889 Sinsheim-Elsenz (DE)
(74) Vertreter: Gleiss, Alf-Olav, Dr.jur. Dipl.-Ing.

(56) Entgegenhaltungen:
- EP-A- 0 467 372
- DE-A- 2 808 610
- DE-A- 19 519 639
- US-A- 4 789 280

## Beschreibung

Die Erfindung betrifft ein Werkzeug zur spanabtragenden Bearbeitung eines Werkstücks gemäß Oberbegriff des Anspruchs 1 sowie ein Verfahren zur spanabtragenden Bearbeitung eines Werkstücks nach Anspruch 13.

Werkzeuge der hier angesprochenen Art sind bekannt (EP-A-0 467 372). Sie dienen der Erzeugung einer nicht ebenen Oberfläche an dem Werkstück, insbesondere an einem Ventilsitz im Bereich eines Zylinderkopfs einer Brennkraftmaschine. Die nicht ebenen Oberflächen zeichnen sich dadurch aus, daß sie im Querschnitt betrachtet aus mindestens zwei gegeneinander geneigten Strecken eines Streckenzuges oder aus einer durchgehend gekrümmten Linie bestehen. Zur Bearbeitung der Oberfläche wird entweder das Werkzeug in Rotation versetzt und mit dem zu bearbeitenden Werkstück in Eingriff gebracht oder das sich drehende Werkstück gegenüber dem feststehenden Werkzeug bewegt. Wesentlich ist, daß zwischen Werkzeug und Werkstück eine Relativbewegung gegeben ist, aufgrund derer mindestens eine Messerplatte des Werkzeugs Späne von dem Werkstück abtragen kann.

Während der Bearbeitung der nicht ebenen Oberfläche wird die Messerplatte gegenüber einer gedachten Mittelachse des Werkzeugs beziehungsweise Werkstücks in radialer Richtung bewegt. Gleichzeitig findet eine Vorschubbewegung des Werkzeugs beziehungsweise Werkstücks in Richtung dieser Mittelachse statt.

Das Werkzeug zeichnet sich dadurch aus, daß es ein gegenüber dem Grundkörper des Werkzeugs bewegliches Teilwerkzeug umfaßt, das beispielsweise gegenüber der obengenannten Mittelachse eine translatorische Bewegung durchführen kann. Beispielsweise kann das Teilwerkzeug als Reibahle ausgebildet sein, die dazu dient, die Innenfläche einer vorgebohrten Lagerbuchse zur Führung eines Ventilschafts einer Feinbearbeitung zu unterwerfen.

Bei den bekannten Werkzeugen wird die Messerplatte von einer Halterung aufgenommen, die zur Durchführung der Axial- und Radialbewegung der Messerplatte mit einem als Schieber ausgebildeten Kopplungselement zusammenwirkt. Mit Hilfe einer Betätigungseinrichtung wird der Schieber während der Bearbeitung der nicht ebenen Oberfläche des Werkstücks innerhalb des Grundkörpers des Werkzeugs verlagert. Um dadurch auftretende Unwuchten des Werkzeugs zu vermeiden, ist ein sogenannter Gegenschieber vorgesehen, der die Massenverlagerung innerhalb des Grundkörpers ausgleichen soll. Es hat sich jedoch gezeigt, daß das Auswuchten eines derartigen Werkzeugs problematisch 'ist. Ein derartiges Werkzeug ist überdies sehr aufwendig aufgebaut und daher kostenintensiv.

Zur Lösung dieser Aufgabe wird ein Werkzeug vorgeschlagen, das die in Anspruch 1 genannten Merkmale aufweist und das sich dadurch auszeichnet, daß es sehr einfach aufgebaut und auswuchtbar ist.

Das Werkzeug zeichnet sich dadurch aus, daß die Kopplungseinrichtung einen Exzenter umfaßt, der mittels der Betätigungseinrichtung um eine gegenüber der Mittelachse des Werkzeugs versetzte Achse drehbar ist. Die Halterung der Messerplatte des Werkzeugs ist so an dem Exzenter angebracht, daß bei einer Drehung des Exzenters einerseits die Halterung entlang einer gedachten bogenförmigen Bahn bewegt wird und andererseits ihren Abstand gegenüber der Mittelachse des Werkzeugs verändert, damit also eine Radialbewegung durchführt. Während der Bearbeitung der nicht ebenen Oberfläche des Werkstücks mittels der Messerplatte wird zumindest die Halterung oder aber das komplette Werkzeug gegenüber dem feststehenden Werkstück oder das Werkstück gegenüber dem Werkzeug einer Axialbewegung in Richtung der Mittelachse unterworfen, so daß insgesamt eine Bewegung der Messerplatte bewirkt wird, die Bewegungskomponenten in axialer als auch in radialer Richtung umfaßt.

Ein bevorzugtes Ausführüngsbeispiel des Werkzeugs zeichnet sich dadurch aus, daß die Kopplungseinrichtung eine die Drehbewegung des Exzenters bewirkende Umsetzeinrichtung umfaßt, die mindestens zwei miteinander kämmende'Gewindeelemente aufweist. Die Gewindeelemente sind vorzugsweise als Steilgewindeelemente ausgebildet. Ein erstes der Gewindeelemente ist mit der Betätigungseinrichtung und ein zweites mit dem Exzenter gekoppelt. Bei einer Aktivierung der Betätigungseinrichtung wird eine Axialbewegung des ersten Gewindeelements in eine Drehbewegung des anderen Gewindeelements umgesetzt, wodurch der Exzenter in Drehung versetzt wird. Dieses Werkzeug zeichnet sich durch einen einfachen, störungsunanfälligen Aufbau aus, der kostengünstig realisierbar ist.

Bevorzugt wird ein Ausführungsbeispiel des Werkzeugs, bei dem ein erstes Gewindeelement als Hülsenelement ausgebildet ist, das auf seiner Innenseite ein Gewinde aufweist. Eine derartige Realisierung ist auf kleinstem Raum möglich, so daß sehr kleine Werkzeuge realisierbar sind.

Bei einem weiteren bevorzugten Ausführungsbeispiel des Werkzeugs ist die Betätigungseinrichtung als erste Druck-/Zugstange ausgebildet. Derartige Betätigungseinrichtungen sind bekannt und daher auf einfache Weise mit bestehenden Werkzeugmaschinen koppelbar.

Bevorzugt wird insbesondere ein Ausführungsbeispiel eines Werkzeugs, bei dem das Teilwerkzeug als Reibahle ausgebildet ist, deren Mittelachse mit der Mittelachse des Werkzeugs zusammenfällt. Mit Hilfe dieses Werkzeugs ist beispielsweise die Erzeugung der Auflagefläche für ein Ventil, also des Ventilsitzes, und die Bearbeitung der Lagerhülse, die den Schaft eines Ventils führt, möglich.

Weitere Ausgestaltungen ergeben sich aus den übrigen Unteransprüchen.

Ein Verfahren zur spanabtragenden Bearbeitung eines Werkstücks zur Erzeugung einer nicht ebenen Oberfläche ist ebenfalls bekannt. Bei der nicht ebenen Oberfläche kann es sich insbesondere um einen Ventilsitz handeln, so daß insoweit auf die Ausführungen zu dem bekannten Werkzeug verwiesen wird. Bei der Bearbeitung der nicht ebenen Oberfläche kann, wie oben ausgeführt, das Werkzeug gegenüber einem feststehenden Werkstück rotieren oder umgekehrt. Wesentlich ist auch hier allein die Relativbewegung zwischen Werkzeug und Werkstück, damit eine Messerplatte Späne von der zu bearbeitenden Oberfläche abtragen kann.

Es ist bekannt, das Werkzeug an das zu bearbeitende Werkstück heranzufahren und zunächst die nicht ebene Oberfläche, beispielsweise also den Ventilsitz im Zylinderkopf einer Brennkraftmaschine, zu bearbeiten. Danach wird das Teilwerkzeug, also bei diesem Beispiel eine Reibahle, aus dem Werkzeug ausgefahren und in das zu bearbeitende Werkstück eingeführt. Dabei wird die Oberfläche der Lagerbuchse für den Ventilschaft bearbeitet.

Es hat sich herausgestellt, daß bei einer derartigen Bearbeitung eine exakte Fluchtung zwischen Ventilsitz und Ventilschaftbohrung nicht in allen Fällen gewährleistet werden kann. Häufig ist auch die Oberflächenqualität und Maßhaltigkeit der Ventilsitzoberfläche nicht optimal.

Es ist daher Aufgabe der Erfindung, ein Verfahren zu schaffen, daß sich dadurch auszeichnet, daß die hier genannten Nachteile vermieden werden.

Zur Lösung dieser Aufgabe wird ein Verfahren vorgeschlagen, das die in Anspruch 13 genannten Verfahrensschritte umfaßt. Es zeichnet sich dadurch aus, daß das Werkzeug zunächst an das Werkstück herangefahren wird, während das Teilwerkzeug in den Grundkörper des Werkzeugs zurückgezogen ist. Es wird dann das Teilwerkzeug in das zu bearbeitende Werkstück eingefahren, um beispielsweise die Lagerbuchse für den Ventilschaft zu bearbeiten. Durch diesen Bearbeitungsschritt wird das Werkzeug gegenüber dem Werkstück exakt zentriert. Es ist daher nun möglich, anschließend einen zweiten Werkstückbereich zur Erzeugung der nicht ebenen Oberfläche mittels der mindestens einen Messerplatte des Werkzeugs zu bearbeiten, wobei diese eine Bewegung in axialer und radialer Richtung durchführt.

Besonders bevorzugt wird eine Ausführungsform des Verfahrens, die sich dadurch auszeichnet, daß zumindest bei Beginn der Bearbeitung des zweiten Werkstückbereichs das Teilwerkzeug in das Werkstück eingefahren ist. Das Teilwerkzeug zentriert damit das Werkzeug in dem zu bearbeitenden Werkstück. Wird nun mit der Bearbeitung des zweiten Werkstückbereichs begonnen, befindet sich das Werkzeug beziehungsweise dessen mindestens eine Messerplatte in einer exakt definierten Position gegenüber dem Werkstück. Damit ergibt sich eine optimale Ausrichtung der beiden mit Hilfe des Werkzeugs bearbeiteten Oberflächenbereiche des Werkstücks.

Weitere Ausführungsformen des Verfahrens ergeben sich aus den übrigen Unteransprüchen.

Die Erfindung wird im folgenden anhand der Zeichnungen näher erläutert.

Es zeigen:
- Figur 1: eine Prinzipskizze eines im Längsschnitt wiedergegebenen ersten Ausführungsbeispiels eines ersten Werkzeugs mit zwei Druck-/Zugstangen;
- Figur 2: eine Prinzipskizze eines weiteren Ausführungsbeispiels eines im Längsschnitt wiedergegebenen Werkzeugs mit einer einzigen Druck-/Zugstange und
- Figur 3: eine Prinzipskizze zur Verdeutlichung des Verfahrens zur spanabtragenden Bearbeitung eines Werkstücks.

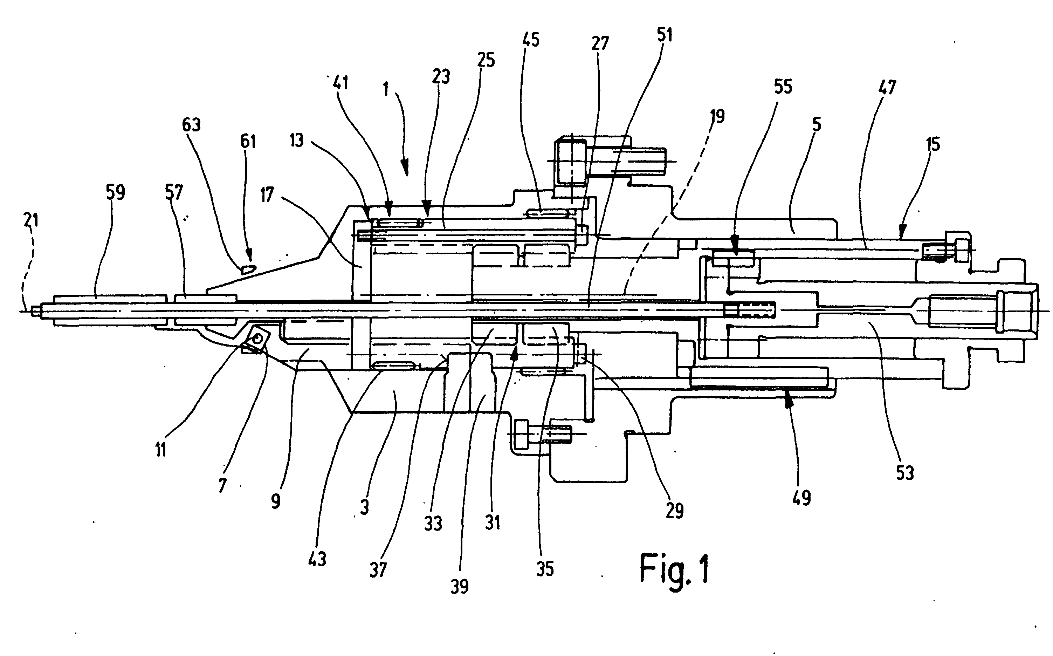

Figur 1 zeigt ein Werkzeug 1 mit einem Grundkörper 3, der auf einer Seite mit einem in eine Werkzeugmaschine einbringbaren Befestigungsschaft 5 versehen ist. Das Werkzeug 1 weist mindestens eine Messerplatte 7 auf, die von einer Halterung 9 aufgenommen wird und an dieser mittels einer Befestigungsschraube 11 angebracht ist. Die auch als Klemmhalter bezeichnete Halterung 9 ist an einer Kopplungseinrichtung 13 angebracht, die mit einer Betätigungseinrichtung 15 zusammenwirkt.

Die Kopplungseinrichtung 13 weist einen mit der Halterung 9 gekoppelten Exzenter 17 auf, dessen Achse 19 gegenüber der Mittelachse 21 des Werkzeugs 1 versetzt ist. Der Exzenter 17 ist über eine Umsetzeinrichtung 23 der Kopplungseinrichtung 13 mit der Betätigungseinrichtung 15 derart gekoppelt, daß bei einer Aktivierung der Betätigungseinrichtung 15 eine Drehbewegung des Exzenters 17 um die Achse 19 erfolgt. Dazu umfaßt die Umsetzeinrichtung 23 mindestens zwei miteinander kämmende Gewindeelemente, die vorzugsweise als Steilgewindeelemente ausgebildet sind. Bei dem hier dargestellten Ausführungsbeispiel ist an dem Exzenter 17 ein erstes Gewindeelement 25 angebracht. Es sind hier beispielsweise Schrauben 27 und 29 vorgesehen, um das erste Gewindeelement 25 an dem Exzenter 17 zu befestigen.

Mit dem ersten Gewindeelement 25 wirkt ein zweites Gewindeelement 31 zusammen, welches hier zwei Teilelemente 33 und 35 aufweist. Das erste Gewindeelement 25 ist als Hülsenelement ausgebildet, das auf seiner Innenseite mit einem Innengewinde ausgestattet ist. Entsprechend ist das zweite Gewindeelement 31 beziehungsweise sind dessen Teilelemente 33 und 35 mit einen Außengewinde versehen, das mit dem Innengewinde des ersten Gewindeelements 25 kämmt.

Das erste Gewindeelement ist auf seiner Außenfläche mit einer Nut 37 versehen, in die ein Sicherungselement 39 eingreift, welches eine axiale Verlagerung des ersten Gewindeelements 25, also eine Verlagerung in Richtung'der Achse 19, verhindert. Die Nut 37 erstreckt sich auf der Außenseite des ersten Gewindeelements 25, über einen kreisbogenförmigen Bereich der konzentrisch zur Achse 19 verläuft.

Das erste Gewindeelement 25 ist mittels einer Lagereinrichtung 41 im Grundkörper 3 des Werkzeugs 1 drehbar gelagert, die hier ein erstes Lager 43 in der Nähe des Exzenters 17 und ein zweites Lager 45 an dem dem Exzenter 17 abgewandten Ende des ersten Gewindeelements 25 umfaßt. Die Lagereinrichtung 41 ist vorzugsweise als Wälzlager ausgebildet, wobei das erste Lager 43 und das zweite Lager 45 in einem möglichst großen Abstand zueinander angeordnet sind, wodurch die Umsetzeinrichtung 23 sicher und möglichst spielfrei gehalten wird.

Die Umsetzeinrichtung 23 wirkt hier mit einer ersten Druck-/Zugstange 47 der Betätigungseinrichtung 15 zusammen, die mit einer geeigneten, bekannten Aktivierungseinrichtung einer Werkzeugmaschine zusammenwirkt und in Richtung der Mittelachse 21 verlagerbar ist. Über eine erste Nut/Federverbindung 49 wird eine Verdrehung der Betätigungseinrichtung 15 beziehungsweise der Druck-/Zugstange 47 gegenüber dem Grundkörper 3 des Werkzeugs 1 während einer Axialverlagerung verhindert. Das zweite Gewindeelement 31 beziehungsweise die Teilelemente 33 und 35 sind auf ein Ende der ersten Druck/Zugstange 47 aufgebracht, beispielsweise aufgepreßt. Wesentlich ist, daß bei einer Axialbewegung der ersten Druck-/Zugstange 47 das zweite Gewindeelement 31 ebenfalls eine Axialbewegung innerhalb des als Hülse ausgebildeten ersten Gewindeelements 25 ausführt, wenn das zweite Gewindeelement 31 als in die Hülse des ersten Gewindeelements 25 einsteckbares Steckteil ausgebildet ist. Aufgrund der als Steilgewinde ausgebildeten Innen- und Außengewinde der Gewindeelemente 25 und 31 wird bei einer Axialbewegung der ersten Druck-/Zugstange 47 eine Rotation des ersten Gewindeelements 25 bewirkt und damit eine Drehbewegung des Exzenters 17 um die Achse 19.

Es zeigt sich, daß für die Funktion der Umsetzeinrichtung 23 die Axialbewegung des zweiten Gewindeelements 31 entscheidend ist, es ist also möglich, daß die Betätigungseinrichtung 15 anstelle der ersten Druck-/Zugstange 47 einen mit dem zweiten Gewindeelement 31 zusammenwirkenden Kolben aufweist, der auf beliebige Weise, beispielsweise hydraulisch oder pneumatisch, in axialer Richtung verlagerbar ist, wodurch das erste Gewindeelement 25 in Rotation versetzbar ist.

Das in Figur 1 dargestellte Werkzeug 1 weist ein in dem Grundkörper 3 untergebrachtes, hier als Reibahle ausgebildetes Teilwerkzeug 51 auf, welches hier in seiner ausgefahrenen Position dargestellt ist.

Das Teilwerkzeug 51 wirkt mit der Betätigungseinrichtung 15 zusammen, die hier eine zweite Druck-/Zugstange 53 umfaßt, die im Inneren der ersten Druck-/Zugstange 47 geführt und durch eine zweite Nut/Federeinrichtung 55 gegen Verdrehen gesichert ist.

Bei dem in Figur 1 dargestellten Ausführungsbeispiel durchdringt das Teilwerkzeug 51, das hier in seiner eingefahrenen Position dargestellt ist, den Grundkörper 3 des Werkzeugs 1.

Das Teilwerkzeug 51 ist starr mit der Betätigungseinrichtung 15 beziehungsweise der zweiten Druck-/Zugstange 53 gekoppelt, so daß bei einer Bewegung der zweiten Druck-/Zugstange in Richtung der Mittelachse 21 eine Axialbewegung des Teilwerkzeugs 51 bewirkt wird.

Das Werkzeug 1 ist an seinem in Figur 1 linken Ende mit einer Führungsbuchse 57 versehen, durch die das Teilwerkzeug 51 aus dem Grundkörper 3 des Werkzeugs 1 austritt.

In Figur 1 ist noch eine Lagerbuchse 59 angedeutet, die in einem hier nicht dargestellten, zu bearbeitenden Werkstück, beispielsweise in einem Zylinderkopf einer Brennkraftmaschine angeordnet ist. Außerdem ist ein zweiter Werkstückbereich 61, nämlich ein Ring 63 angedeutet, der mittels der Messerplatte 7 zur Erzeugung einer nicht ebenen Oberfläche, nämlich eines Ventilsitzes, mittels des Werkzeugs 1 bearbeitet wird.

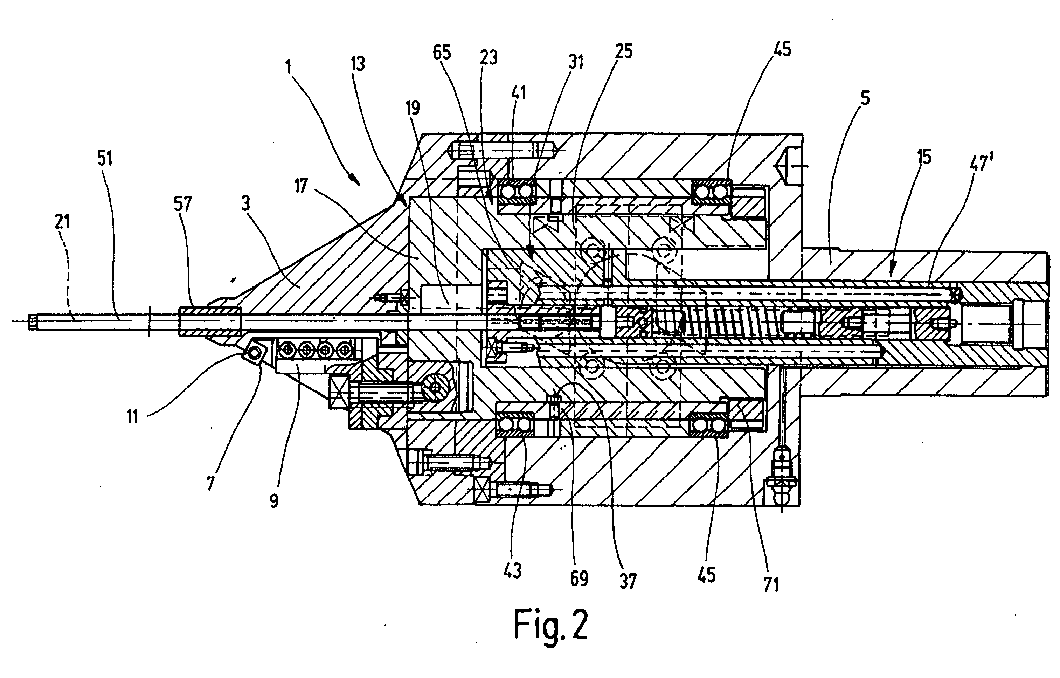

Figur 2 zeigt im Längsschnitt ein zweites Ausführungsbeispiel des Werkzeugs 1, bei dem gleiche Teile mit gleichen Bezugsziffern versehen sind, so daß insoweit auf die Beschreibung zu Figur 1 verwiesen wird.

Das Werkzeug 1 gemäß Figur 2 weist eine Kopplungseinrichtung 13 auf, die einen Exzenter 17 sowie eine Umsetzeinrichtung 23 auf, deren erstes als Hülsenelement ausgebildetes Gewindeelement 25 einstückig mit dem Exzenter 17 ausgebildet ist. Das erste Gewindeelement 25 weist auf seiner Innenseite eine auch als Drallnut bezeichnete, auf einer gedachten Schraubenlinie liegende Innennut auf, in die ein hier gestrichelt angedeuteter Stein 65 eingreift, der starr mit der Betätigungseinrichtung 15 gekoppelt ist, die hier lediglich eine einzige Druck-/Zugstange 47' umfaßt. Diese ist im Inneren des Grundkörpers 3 des Werkzeugs 1 in Richtung der Mittelachse 21 verlagerbar, wobei der Stein 65 zwangsweise ebenfalls in axialer Richtung verschoben wird. Dieser dient als zweites Gewindeelement 31, das so mit dem ersten Gewindeelement 25 zusammenwirkt, daß bei einer Axialbewegung des Steins 65 beziehungsweise der Druck-/Zugstange 47' eine Drehbewegung des Exzenters 17 bewirkt wird. Dadurch wird auch hier die über eine Halterung 9 am Exzenter 17 angebrachte Messerplatte 7 entlang einer bogenförmig gekrümmten Bahn bewegt, wobei sich deren Abstand gegenüber der Mittelachse 21 ändert.

Auch bei dem hier dargestellten Ausführungsbeispiel ist eine Lagereinrichtung 41 vorgesehen, die ein erstes dem Exzenter zugewandtes Lager 43 und ein zweites an dem dem Exzenter 17 abgewandten Ende der Umsetzungseinrichtung 23 angeordnetes zweites Lager 45 aufweist.

Auch bei dem in Figur 2 dargestellten Ausführungsbeispiel durchdringt das Teilwerkzeug 51, das hier in seiner ausgefahrenen Position dargestellt ist, den Grundkörper 3 des Werkzeugs 1. Es ist wiederum mittels einer Führungsbuchse 57 geführt und mit der Betätigungseinrichtung 15 beziehungsweise der Druck-/Zugstange 47' gekoppelt.

Auch bei dem in Figur 2 dargestellten Ausführungsbeispiel ist eine hier nicht dargestellte Nut/Feder-Einrichtung vorgesehen, die eine Verdrehung der Betätigungseinrichtung 15 beziehungsweise der Druck-/Zugstange 47' gegenüber dem Grundkörper 3 des Werkzeugs 1 verhindert.

Zu der anhand der Figuren 1 und 2 erläuterten Umsetzeinrichtung ist noch folgendes festzuhalten: Es wurde bei beiden in den Figuren dargestellten Ausführungsbeispielen davon ausgegangen, daß ein erstes Gewindeelement 25 mit einem Innengewinde und ein zweites Gewindeelement mit einem Außengewinde ausgebildet ist. Bei der Realisierung gemäß Figur 2 besteht das Innengewinde aus der auf der Innenfläche des ersten Gewindeelements 25 vorgesehenen Innennut und das Außengewinde des zweiten Gewindeelements 31 aus mindestens einem Stein 65, der in die Innennut eingreift.

Bei beiden Ausführungsbeispielen ist es möglich, die Funktion der Umsetzeinrichtung auch dadurch zu realisieren, daß mittels einer Betätigungseinrichtung 15 ein als Hülse ausgebildetes erstes Gewindeelement in axialer Richtung bewegt wird, welches über ein Innengewinde mit einem Außengewinde eines zweiten Gewindeelements zusammenwirkt, welches einen Exzenter in Drehbewegung versetzt, während das hülsenförmige erste Gewindeelement in axialer Richtung verlagert wird.

Bei dem in Figur 2 dargestellten Ausführungsbeispiels des Werkzeugs 1 ist ebenfalls auf geeignete Weise sichergestellt, daß bei einer Axialbewegung der Betätigungseinrichtung 15 eine Verlagerung der Umsetzeinrichtung 23 beziehungsweise des ersten Gewindeelements 25 verhindert wird. Es ist hier beispielhaft ein Sicherungsstift 69 vorgesehen, der in der Lagerungseinrichtung 41 verankert ist und in eine in die Außenfläche des ersten Gewindeelements 25 eingebrachte Nut 37 eingreift. Die Lagereinrichtung 41 ist durch einen Sicherungsring 71, der beispielsweise auf das erste Gewindeelement 25 aufgeschraubt ist, gegen eine axiale Verschiebung gesichert. Damit ist also sichergestellt, daß eine axiale Bewegung der Betätigungseinrichtung 15 beziehungsweise der Druck-/Zugstange 47' ausschließlich in eine Drehbewegung des ersten Gewindeelements 25 beziehungsweise des Exzenters 17 umgesetzt wird.

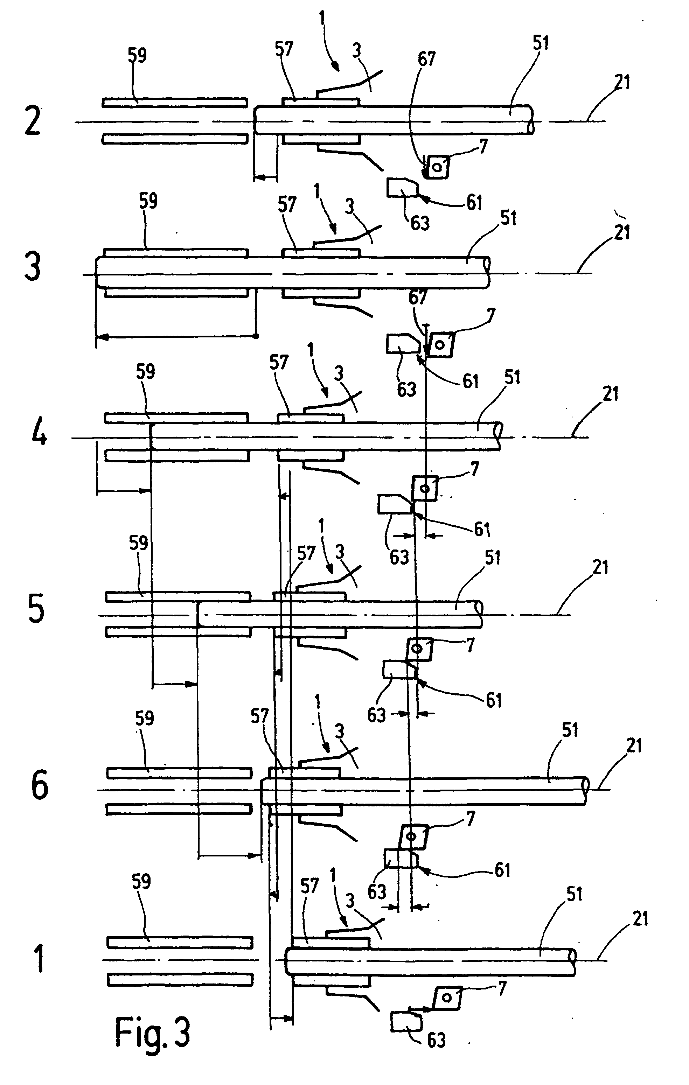

Im folgenden wird auf die Funktion des anhand von Figur 1 und 2 erläuterten Werkzeugs und auf die Durchführung des Verfahrens zur spanabtragenden Bearbeitung eines Werkstücks anhand von Figur 3 näher eingegangen:

Figur 3 zeigt durch die Ziffern 1 bis 6 dargestellte verschiedene Funktionsstellungen des hier lediglich angedeuteten Werkzeugs 1 und des zugehörigen Teilwerkzeugs 51 an, anhand derer das Verfahren erläutert werden soll. Figur 3 zeigt auch die Führungsbuchse 57. Von dem zu bearbeitenden Werkstück sind hier lediglich die Lagerbuchse 59 sowie der Ring 63 angedeutet, der den zweiten Werkstückbereich 61 darstellt, in dem die nicht ebene Oberfläche mittels der Messerplatte 7 erzeugt werden soll.

Ganz unten in Figur 3 ist die Ausgangsposition des Werkzeugs 1 gegenüber einem zu bearbeitenden Werkstück gezeigt. Das Teilwerkzeug 51, also die Reibahle, ist hier fast vollständig in den Grundkörper 3 beziehungsweise die Führungsbuchse 57 zurückgezogen. Wesentlich ist, daß in dieser Funktionsstellung beziehungsweise bei diesem Verfahrensschritt weder das Teilwerkzeug 51 noch die Messerplatte 7 mit dem zu bearbeitenden Werkstück in Eingriff stehen. Das heißt, das Teilwerkzeug 51 ist so weit zurückgezogen, daß die Lagerbuchse 59 nicht bearbeitet wird, außerdem steht die Messerplatte 7 nicht in Eingriff mit dem Ring 63.

Ganz oben in Figur 3 ist mit Ziffer 2 ein erster Verfahrensschritt angedeutet. Es wird hier das Teilwerkzeug 51 radial in Richtung auf einen ersten Werkstückbereich, nämlich die Lagerbuchse 59, verlagert, um deren Innenfläche einer spanabtragenden Bearbeitung zu unterziehen.

Es ist hier durch einen Pfeil 67 angedeutet, daß die Messerplatte 7 gegenüber der Mittelachse 21 des Werkzeugs 1 radial nach außen bewegt wird.

Das Teilwerkzeug 51 wird weiter einer Vorschubbewegung unterworfen, das heißt aus dem Grundkörper 3 des Werkzeugs 1 ausgefahren, bis es die Lagerbuchse 59 über deren gesamten Länge bearbeitet hat. Dies ist in der mit der Ziffer 3 gekennzeichneten Funktionsstellung in Figur 3 angedeutet. Es ist dort auch gezeigt, daß die Messerplatte 7 weiter in radialer Richtung nach außen bewegt wird.

Die radiale Auswärtsbewegung der Messerplatte 7 wird in den Verfahrensschritten 2 und 3 dadurch bewirkt, daß der Exzenter 17 einer Drehbewegung unterworfen wird.

Bei dem in Figur 3 mit der Ziffer 4 gekennzeichneten dritten Verfahrensschritt wird das Teilwerkzeug 51 in den Grundkörper 3 des Werkzeugs 1 eingezogen, das heißt aus der Lagerbuchse 59 herausgezogen.

Die Messerplatte 7 bearbeitet den zweiten Werkstückbereich 61, nämlich den Ring 63 zur Erzeugung einer nicht ebenen Oberfläche, hier zur Erzeugung des Ventilsitzes. Dazu wird die Messerplatte gleichzeitig einer radialen Einwärtsbewegung, also einer in Richtung auf die Mittelachse 21 erfolgenden Bewegung und einer Axialbewegung unterworfen, die gemäß Ziffer 4 in Figur 3 durch einen Pfeil 67 angedeutet ist. Durch die überlagerte Radial- und Axialbewegung der Messerplatte 7 wird an dem Ring 63 die nicht ebene Oberfläche erzeugt.

Ziffer 5 zeigt einen vierten Verfahrensschritt, der lediglich verdeutlicht, daß das Teilwerkzeug 51 weiter aus der Lagerbuchse 59 herausgefahren und in den Grundkörper 3 des Werkzeugs 1 eingezogen wird.

Zur Erzeugung der nicht ebenen Oberfläche am Ring 63 wird das Werkzeug 1 weiter in axialer Richtung, also in Richtung der Mittelachse 21, nach links verfahren, während die Messerplatte 7 einer radialen Einwärtsbewegung in Richtung auf die Mittelachse 21 unterworfen wird.

Gemäß Ziffer 6 in Figur 3 wird das Teilwerkzeug 51 weiter in den Grundkörper 3 des Werkzeugs 1 zurückgezogen, so daß es schließlich aus der Lagerbuchse 59 gänzlich ausgefahren ist. Aus der Darstellung gemäß Ziffer 6 in Figur 3 ist weiterhin ersichtlich, daß die Messerplatte 7 durch eine Vorschubbewegung des Werkzeugs 1 eine weitere Axialbewegung ausführt und dabei gleichzeitig radial in Richtung auf die Mittelachse 21 verlagert wird.

In einem letzten Verfahrensschritt, der wieder mit Ziffer 1 gekennzeichnet und in Figur 3 ganz unten dargestellt ist, wird das Werkzeug 1 nach rechts verlagert, so daß eine Axialbewegung der Messerplatte 7 erfolgt. Diese befindet sich nunmehr in der radial innersten Position, also im geringsten Abstand zur Mittelachse 21. Damit hat das Werkzeug 1 eine Ausgangslage eingenommen, die der oben erläuterten Grundposition entspricht. Die Bearbeitung des Werkstücks ist damit abgeschlossen.

Bei der Durchführung des anhand von Figur 3 erläuterten Verfahrens können die Messerplatte 7 und das Teilwerkzeug 21 bei einem Werkzeug 1 gemäß dem Ausführungsbeispiel in Figur 1 getrennt voneinander verlagert werden. Die bei dem ersten Ausführungsbeispiel vorgesehene Betätigungseinrichtung 15 weist nämlich zwei unabhängig voneinander aktivierbare Druck-/Zugstangen 47 und 53 auf, wobei die erste Druck-/Zugstange 47 der Umsetzeinrichtung 23 beziehungsweise der Verlagerung der Messerplatte 7 zugeordnet ist und die zweite Druck-/Zugstange 53 der Verlagerung des Teilwerkzeugs 51.

Bei einem anhand von Figur 2 erläuterten Ausführungsbeispiel des Werkzeugs 1 weist die Betätigungseinrichtung 15 lediglich eine einzige Druck-/Zugstange 47' auf. Wird diese in axialer Richtung, also in Richtung der Mittelachse 21, verlagert, so wird damit zwangsweise auch das Teilwerkzeug 51 in axialer Richtung ein- beziehungsweise ausgefahren. Gleichzeitig wird durch die anhand von Figur 2 erläuterte Umsetzeinrichtung 23 der Exzenter 17 des zweiten Ausführungsbeispiels gemäß Figur 2 einer Drehbewegung unterworfen, weil der Stein 65 mit der Innennut des ersten Gewindeelements 25 zusammenwirkt. Es ist hier also eine mechanische Kopplung zwischen Axialbewegung des Teilwerkzeugs 51 und Drehbewegung des Exzenters 17 gegeben. Damit ist auch die Radialbewegung der Messerplatte 17 mit der Axialbewegung des Teilwerkzeugs 51 starr gekoppelt.

Beiden Ausführungsbeispielen ist gemeinsam, daß die Axialbewegung der Messerplatte 7 durch eine Axialbewegung des gesamten Werkzeugs 1 bewirkt wird. Es ist jedoch auch möglich, daß lediglich die Halterung 9 gegenüber dem Grundkörper 3 eine Axialbewegung ausführt, wenn eine spezielle Betätitungsvorrichtung vorgesehen wird, die diese Bewegung bewirkt.

Aus den Erläuterungen ist ersichtlich, daß das Teilwerkzeug 51, das die Umsetzeinrichtung 23 und den Exzenter 17 durchdringt, so geführt sein muß, daß die gewünschte Drehbewegung des Exzenters möglich ist. Dieser ist beispielsweise mit einer bogenförmigen Ausnehmung versehen, durch die das Teilwerkzeug 51 geführt ist.

Zur Funktion des anhand der Figuren 1 und 2 erläuterten Werkzeugs und zum Verfahren zur spanabtragenden Bearbeitung eines Werkstücks ist noch folgendes festzuhalten:

Die Bearbeitung der beiden Werkstückbereiche kann auch in umgekehrter Reihenfolge erfolgen. Es ist also möglich, zunächst den Ventilsitz zu bearbeiten und dabei die mindestens eine Messerplatte mittels eines Exzenters zu verlagern, und erst anschließend die Lagerbuchse 59 zu bearbeiten, die den Ventilschaft führt. Dadurch, daß die beiden Werkstückbereiche in einem einzigen Arbeitsgang bearbeitet werden und ein erneutes Heranführen eines Werkzeugs in einem zweiten getrennten Bearbeitungsgang entfällt, wird eine optimale Ausrichtung des Werkzeugs gegenüber den zu bearbeitenden Werkstückbereichen sichergestellt, so daß der Ventilsitz gegenüber der Lagerbuchse konzentrisch angeordnet ist.

Besonders vorteilhaft ist jedoch bei dem oben beschriebenen Verfahren, daß die Ventilsitzbearbeitung eingeleitet wird, während noch das Teilwerkzeug 51 in der Lagerbuchse geführt ist. Es ergibt sich hierbei also quasi eine mechanische Kopplung der Messerplatte mit dem Teilwerkzeug, so daß hier die konzentrische Anordnung von Ventilsitz und Lagerbuchse in besonderem Maße gewährleistet ist.

## Patentansprüche

1. Werkzeug (1) zur spanabtragenden Bearbeitung eines Werkstücks zur Erzeugung einer ersten nicht ebenen Oberfläche, insbesondere eines Ventilsitzes, mit einem Grundkörper (3), der mindestens eine von einer Halterung (9) aufgenommenen Messerplatte (7) aufweist, die der Bearbeitung der ersten, nicht ebenen Oberfläche dient, einem gegenüber dem Grundkörper (3) verlagerbaren Teilwerkzeug (51), das der Bearbeitung einer zweiten berfläche des Werkstücks dient, einer mit der Halterung (9) über eine Kopplungseinrichtung (13) zusammenwirkenden Betätigungseinrichtung (15), **dadurch gekennzeichnet, dass** die Kopplungseinrichtung (13) einen Exzenter (17) umfasst, der mittels der Betätigungseinrichtung (15) um eine gegenüber der Mittelachse (21) des Werkzeugs (1) versetzte Achse (19) drehbar ist, dass eine Drehung des Exzenters (17) eine radiale Verlagerung der Messerplatte (7) bewirkt, und dass mittels der Betätigungseinrichtung (15) die axiale Verlagerung des Teilwerkzeugs (51) gegenüber dem Grundkörper (3) und die radiale Verlagerung der Messerplatte (7) bewirkt wird.

2. Werkzeug nach Anspruch 1, **dadurch gekennzeichnet, dass** die Kopplungseinrichtung (13) eine die Drehbewegung des Exzenters (17) bewirkende Umsetzeinrichtung (23) umfasst.

3. Werkzeug nach Anspruch 1 oder 2, **dadurch gekennzeichnet, daß** die Umsetzeinrichtung (23) mindestens zwei miteinander kämmende Gewindeelemente (25,31) aufweist, die vorzugsweise als Steilgewindeelemente ausgebildet sind und von denen ein erstes der Betätigungseinrichtung (15) und ein zweites dem Exzenter (17) zugeordnet ist.

4. Werkzeug nach Anspruch 3, **dadurch gekennzeichnet, dass** das erste Gewindeelement (25) ein Außen- oder ein Innengewinde und das zweite Gewindeelement (31) ein Innen- oder ein Außengewinde aufweist.

5. Werkzeug nach Anspruch 4, **dadurch gekennzeichnet, dass** das das Innengewinde aufweisende Gewindeelement als Hülsenelement ausgebildet ist.

6. Werkzeug nach Anspruch 5, **dadurch gekennzeichnet, dass** das das Außengewinde aufweisende Gewindeelement als in das Hülsenelement einführbares Steckteil ausgebildet ist.

7. Werkzeug nach einem der vorhergehenden Ansprüche, **dadurch gekennzeichnet, dass** das Teilwerkzeug (51) als Reibahle ausgebildet ist, deren Mittelachse mit der Mittelachse (21) des Werkzeugs (1) zusammenfällt.

8. Werkzeug nach einem der vorhergehenden Ansprüche, **dadurch gekennzeichnet, daß** das Teilwerkzeug (51) in Richtung der Mittelachse (21) verschieblich ist.

9. Werkzeug nach einem der vorhergehenden Ansprüche, **dadurch gekennzeichnet, dass** das Teilwerkzeug (51) die Kopplungseinrichtung (13) und/oder die Betätigungseinrichtung (15) durchdringt.

10. Werkzeug nach einem der vorhergehenden Ansprüche, **dadurch gekennzeichnet, dass** die Betätigungseinrichtung (15) eine erste Druck-/Zugstange (47) aufweist.

11. Werkzeug nach Anspruch 10, **dadurch gekennzeichnet, dass** die Betätigungseinrichtung eine zweite Druck-/Zugstange aufweist.

12. Werkzeug nach Anspruch 11, **dadurch gekennzeichnet, dass** die zweite Druck-/Zugstange (53) konzentrisch zur ersten Druck-/Zug-Stange (47) angeordnet ist.

13. Verfahren zur spanabtragenden Bearbeitung eines Werkstücks zur Erzeugung einer nicht ebenen Oberfläche, insbesondere eines Ventilsitzes, mittels eines Werkzeugs nach einem der Ansprüche 1 bis 12, welches folgende Schritte umfasst:
- Heranfahren des Werkzeugs (1) an das Werkstück bei in das Werkzeug (1) eingefahrenem Teilwerkzeug (51),
- Ausfahren des Teilwerkzeugs (51) aus dem Werkzeug (1) in das zu bearbeitende Werkstück, zur Bearbeitung eines ersten Werkstückbereichs,
- anschließende Bearbeitung eines zweiten Werkstückbereichs zur Erzeugung der nicht ebenen Oberfläche mittels der mindestens einen Messerplatte (7), wobei diese eine Bewegung in axialer Richtung durchführt und die axiale Bewegung entgegengesetzt zu der axialen Bewegung, die zur Bearbeitung des ersten Werkstückbereichs gefahren wurde, ist, und die Bewegung der Messerplatte (7) in radialer Richtung erfolgt.

14. Verfahren nach Anspruch 13, **dadurch gekennzeichnet, dass** zumindest bei Beginn der Bearbeitung des zweiten Werkstückbereichs das Teilwerkzeug (51) in das Werkstück eingefahren ist.

15. Verfahren nach Anspruch 13 oder 14, **dadurch gekennzeichnet, dass** die axiale Bewegung der Messerplatte (7) durch eine axiale Bewegung einer Halterung (9) der Messerplatte (7) und/oder des Werkzeugs (1) bewirkt wird.

## Claims

1. Tool (1) for a machining process of a workpiece for the manufacture of a first, non-level surface, especially of a valve seat, with a base body (3), whereby the same incorporates at least one knife plate (7) received by a holding means (9), for the processing of the said first, non-level surface, a part tool (51) offset in relation to the base body (3), for the processing of a second surface of a workpiece, and an activating means (15) co-operating with the holding means (9) via a coupling means (13), **characterised in that** the coupling means (13) comprises an eccentric (17), whereby the same can be rotated around an axis (19) that is offset in relation to the central axis (21) of the tool (1) with the aid of the activating means (15), so that a rotating of the eccentric (17) results in a radial displacement of the knife plate (7), and so that the axial displacement of the part tool (51) in relation to the base body (3) and a radial displacement of the knife plate (7) can be achieved with the aid of the activating means (15).

2. Tool according to claim 1, **characterised in that** the coupling means (13) comprises a converting means (23) that creates the rotation movement of the eccentric (17).

3. Tool according to claim 1 or 2, **characterised in that** the converting means (23) comprises at least two intermeshing thread elements (25, 31) which preferably form a steep thread element, and from which a first one is allocated to the activating means (15), whilst a second one is allocated to the eccentric (17).

4. Tool according to claim 3, **characterised in that** the first thread element (25) comprises an external or an internal thread, and **in that** the second thread element (31) comprises an internal or an external thread.

5. Tool according to claim 4, **characterised in that** the thread element comprising the internal thread takes the form of a sleeve element.

6. Tool according to claim 5, **characterised in that** the thread element comprising the external thread takes the form of an insertion piece to be inserted into the sleeve element.

7. Tool according to one of the preceding claims, **characterised in that** the part tool (51) takes the form of a reamer whose central axis coincides with the central axis (21) of the tool (1).

8. Tool according to one of the preceding claims, **characterised in that** the part tool (51) can be displaced in the direction of the central axis (21).

9. Tool according to one of the preceding claims, **characterised in that** the part tool (51) projects through the coupling means (13) and/or through the activating means (15).

10. Tool according to one of the preceding claims, **characterised in that** the activating means (15) comprises a first pushing/pulling rod (47).

11. Tool according to claim 10, **characterised in that** the activating means comprises a second pushing/pulling rod.

12. Tool according to claim 11, **characterised in that** the second pushing/pulling rod (53) is located concentrically in relation to the first pushing/pulling rod (47).

13. Method for a machining process of a workpiece for the manufacture of a non-level surface, especially of a valve seat, with a tool according to one of the preceding claims 1 to 12, whereby said method comprises the following steps:
- the moving of the tool (1) up to the workpiece with the aid of the part tool (51) comprised within the tool (1),
- the moving of the part tool (51) out of the tool (1) into the workpiece to be processed, for the processing of a first workpiece area,
- the subsequent processing of a second workpiece area for the manufacture of a non-level surface with the aid of the at least one knife plate (7), whereby the same executes a movement in an axial direction, and whereby the axial movement is opposite to the axial movement that was executed for the processing of the first workpiece area, and whereby the knife plate (7) is moved in a radial direction.

14. Method according to claim 13, **characterised in that** the part tool (51) is introduced into the workpiece at least at the beginning of the processing of the second workpiece area.

15. Method according to claim 13 or 14, **characterised in that** the axial movement of the knife plate (7) is effected by an axial movement of the holding means (9) of the knife plate (7) and/or the tool (1).

## Revendications

1. Outil (1) pour l'usinage par enlèvement de copeaux d'une pièce à usiner pour obtenir une première surface non plane, notamment un siège de soupape, comprenant un corps de base (3) qui présente au moins une plaque porte-lame (7) reçue par un support (9) et servant à l'usinage de la première surface non plane, un outil partiel (51) pouvant être déplacé par rapport au corps de base (3) et servant à l'usinage d'une deuxième surface de la pièce à usiner, et un dispositif d'actionnement (15) coopérant avec le support (9) par l'intermédiaire d'un dispositif de couplage (13), **caractérisé en ce que** le dispositif de couplage (13) comprend un excentrique (17) pouvant être tourné au moyen du dispositif d'actionnement (15) autour d'un axe (19) décalé par rapport à l'axe central (21) de l'outil (1), **en ce qu'**une rotation de l'excentrique (17) provoque un déplacement radial de la plaque porte-lame (7), et **en ce qu'**au moyen du dispositif d'actionnement (15) sont provoqués le déplacement axial de l'outil partiel (51) par rapport au corps de base (3) ainsi que le déplacement radial de la plaque porte-lame (7).

2. Outil selon la revendication 1, **caractérisé en ce que** le dispositif de couplage (13) comprend un dispositif de conversion (23) provoquant un mouvement de rotation de l'excentrique (17).

3. Outil selon la revendication 1 ou 2, **caractérisé en ce que** le dispositif de conversion (23) présente au moins deux éléments filetés (25, 31) s'engrenant l'un dans l'autre et présentant de préférence la forme d'éléments filetés de réglage et dont un premier est associé au dispositif d'actionnement (15) et un deuxième à l'excentrique (17).

4. Outil selon la revendication 3, **caractérisé en ce que** le premier élément fileté (25) présente un filet mâle ou un filet femelle et le deuxième élément fileté (31) un filet femelle ou un filet mâle.

5. Outil selon la revendication 4, **caractérisé en ce que** l'élément fileté présentant le filet femelle est un élément en forme de douille.

6. Outil selon la revendication 5, **caractérisé en ce que** l'élément fileté présentant le filet mâle est un élément en forme de fiche pouvant être introduit dans l'élément en forme de douille.

7. Outil selon l'une quelconque des revendications précédentes, **caractérisé en ce que** l'outil partiel (51) présente la forme d'un alésoir dont l'axe central coïncide avec l'axe central (21) de l'outil (1).

8. Outil selon l'une quelconque des revendications précédentes, **caractérisé en ce que** l'outil partiel (51) peut être déplacé en direction de l'axe central (21).

9. Outil selon l'une quelconque des revendications précédentes, **caractérisé en ce que** l'outil partiel (51) traverse le dispositif de couplage (13) et/ou le dispositif d'actionnement (15).

10. Outil selon l'une quelconque des revendications précédentes, **caractérisé en ce que** le dispositif d'actionnement (15) présente une première tige de pression/traction (47).

11. Outil selon la revendication 10, **caractérisé en ce que** le dispositif d'actionnement présente une deuxième tige de pression/traction.

12. Outil selon la revendication 11, **caractérisé en ce que** la deuxième tige de pression/traction (53) est disposée de façon concentrique par rapport à la première tige de pression/traction (47).

13. Procédé pour l'usinage par enlèvement de copeaux d'une pièce à usiner pour obtenir une surface non plane, notamment d'un siège de soupape, au moyen d'un outil selon l'une quelconque des revendications 1 à 12, comprenant les étapes suivantes :
- approcher l'outil (1) vers la pièce à usiner, l'outil partiel (51) étant rentré dans l'outil (1),
- sortir l'outil partiel (51) de l'outil (1) dans la pièce à usiner pour usiner une première zone de pièce à usiner,
- puis usiner une deuxième zone de pièce à usiner pour obtenir la surface non plane au moyen de l'au moins une plaque porte-lame (7), celle-ci exécutant un mouvement dans la direction axiale et le mouvement axial étant opposé au mouvement axial exécuté pour usiner la première zone de pièce à usiner, et le mouvement de la plaque porte-lame (7) étant exécuté dans la direction radiale.

14. Procédé selon la revendication 13, **caractérisé en ce qu'**au moins au début de l'usinage de la deuxième zone de pièce à usiner l'outil partiel (51) est rentré dans la pièce à usiner.

15. Procédé selon la revendication 13 ou 14, **caractérisé en ce que** le mouvement axial de la plaque porte-lame (7) est provoqué par un mouvement axial d'un support (9) de la plaque porte-lame (7) et/ou de l'outil (1).
